(19) **Europäisches Patentamt / European Patent Office / Office européen des brevets**

(11) **EP 3 296 235 A1**

(12) # EUROPEAN PATENT APPLICATION

(43) Date of publication:
21.03.2018 Bulletin 2018/12

(21) Application number: 17191400.5

(22) Date of filing: 15.09.2017

(51) Int Cl.:
*B65G 47/26* (2006.01)     *B65G 47/68* (2006.01)
*B65G 59/12* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 16.09.2016   US 201662395626 P
12.12.2016   US 201662432860 P
12.09.2017   US 201715701824

(71) Applicant: **Siemens Industry, Inc.**
**Alpharetta, GA 30005 (US)**

(72) Inventors:
• **DWIVEDI, Rajeev**
**Plano, TX Texas 75025 (US)**
• **YAKLIN, Michael**
**Coppell, TX Texas 75019 (US)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(54) **CASCADE DE-LAYERING**

(57)     A systems and methods for delayering parcels. A method includes receiving a bulk parcel flow of a plurality of parcels, the bulk parcel flow having multiple layers of the plurality of parcels. The method includes performing a first delayering process on the bulk parcel flow to produce a second parcel flow. The method includes performing at least one additional delayering process on the second parcel flow to produce a delayered parcel flow.

## FIG. 6

EP 3 296 235 A1

## Description

TECHNICAL FIELD

The present disclosure is directed, in general, to parcel processing techniques.

BACKGROUND OF THE DISCLOSURE

Parcels, including any mail piece or other package, can be most efficiently processed using automation equipment. Improved equipment is desirable.

SUMMARY OF THE DISCLOSURE

Various disclosed embodiments include systems, methods, and machine-readable media for delayering parcels. A method includes receiving a bulk parcel flow of a plurality of parcels. The method includes performing a first delayering process on the bulk parcel flow to produce a second parcel flow. The method includes performing at least one additional delayering process on the second parcel flow to produce a delayered parcel flow.

In various embodiments, at least one of the first delayering process or the additional delayering process includes feeding the parcels on a conveyor to a slide. In various embodiments, the slide has a first sensor near a top end and a second sensor near a bottom end, and the conveyor can operate at a maximum speed when both the first and second sensors indicate that there is no obstruction on the slide at respective points, at an intermediate speed when either the first sensor or the second sensor indicates an obstruction at the respective points, and can be stopped when both the first sensor and the second sensor indicates an obstruction at those points. In various embodiments, the slide has a coefficient of friction and slide angle such that parcels in upper layers of the plurality of layers are caused to fall to lower layers of the plurality of layers. In various embodiments, a shearing bar causes parcels in upper layers of the plurality of layers to fall to lower layers of the plurality of layers. In various embodiments, both the first delayering process and the additional delayering process include feeding the parcels on a conveyor to a slide.

A parcel delayering system includes a first stage configured to receive a bulk parcel flow of a plurality of parcels, the bulk parcel flow having multiple layers of the plurality of parcels, and to perform a first delayering process on the bulk parcel flow to produce a second parcel flow, and a second stage configured to perform an additional delayering process on the second parcel flow to produce a delayered parcel flow.

In various embodiments, wherein at least one of the first stage or the second stage comprises a slide and a conveyor configured to feed the parcels to the slide. In various embodiments, the slide has a first sensor near a top end and a second sensor near a bottom end, and the conveyor is configured to operate at a maximum speed when both the first and second sensors indicate that there is no obstruction on the slide at respective points, operate at an intermediate speed when either the first sensor or the second sensor indicates an obstruction at the respective points, and is stopped when both the first sensor and the second sensor indicates an obstruction at those points. In various embodiments, the slide has a coefficient of friction and slide angle such that parcels in upper layers of the plurality of layers are caused to fall to lower layers of the plurality of layers. In various embodiments, at least one of the first stage or the second stage further comprises a shearing bar extending across a width of the slide and placed to cause parcels in upper layers of the plurality of layers to fall to lower layers of the of the plurality of layers. In various embodiments, both the first stage and the second stage comprise a slide and a conveyor configured to feed the parcels to the slide.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:

Figure 1 depicts a block diagram of a data processing system in which an embodiment can be implemented;

Figure 2 generally illustrates delayering of bulk items in three dimensions into a single layer;

Figure 3 illustrates an example of transformation of a multi-layered package stream into reduced number of layers by shearing and transposing in accordance with disclosed embodiments;

Figure 4 illustrates single stage of a system as disclosed herein;

Figure 5 illustrates cascade delayering in accordance with disclosed embodiments; and

Figure 6 illustrates a process in accordance with disclosed embodiments.

DETAILED DESCRIPTION

The figures discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

The automated processing and sorting of goods and other parcels typically involves individual actions being taken on the goods being processed, so that a plurality of items that are being processed or sorted may each be handled differently. This, in turn, necessitates individual processing.

A singulator creates a sequential flow of individual items from a bulk flow of parcels. The supply of items is often from a conveyor belt in which multiple items are comingled in 3 axes. To singulate the items, it can be important to subdivide multiple layers into single layers ("destacking" or "delayering").

According to disclosed embodiments, a sequence of controlled, metered flow conveyors, combined with one or more slides with level sensors, shears and transposes a 3-dimensional parcel structure (whether an organized stack of parcels or a "pile" of parcels) into thinner layers. The speed of the feeding belt is governed by how much material is discharged on the slide. Under the influence of gravity, the leading layers slide forward and down, thus transforming the structure of the package stream into a single layer, so that the packages are effectively and efficiently de-layered.

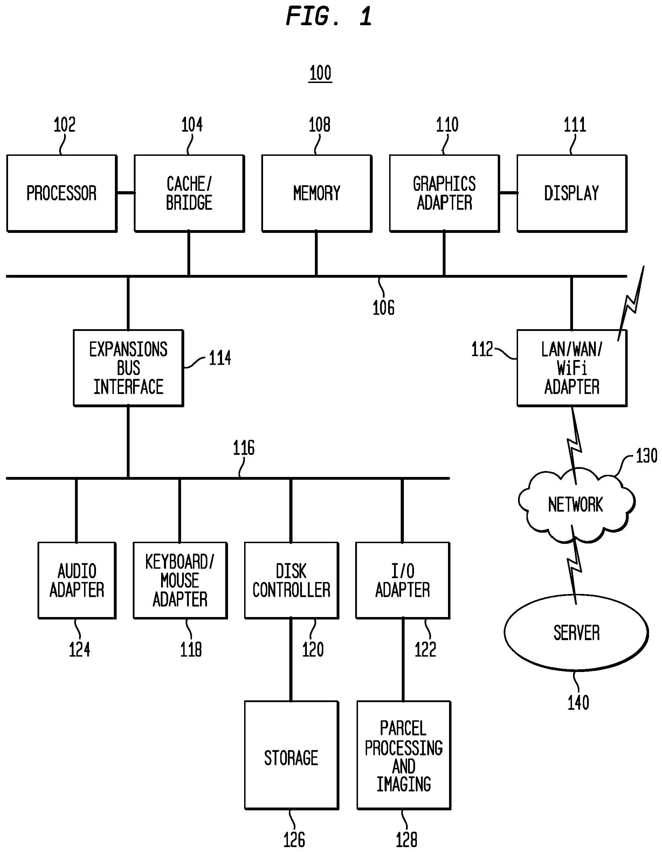

Figure 1 depicts a block diagram of a data processing system 100 in which an embodiment can be implemented, for example as a control system for a mechanism as described below, and can be configured to perform processes as described herein. The data processing system depicted includes a processor 102 connected to a level two cache/bridge 104, which is connected in turn to a local system bus 106. Local system bus 106 may be, for example, a peripheral component interconnect (PCI) architecture bus. Also connected to local system bus in the depicted example are a main memory 108 and a graphics adapter 110. The graphics adapter 110 may be connected to display 111.

Other peripherals, such as local area network (LAN) / Wide Area Network / Wireless (*e.g.* WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

I/O adapter 122 can be connected to delayering system 128, as described herein, to dimension, sort, transport, and otherwise process the items in accordance with the various embodiments described herein.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, etc.

Those of ordinary skill in the art will appreciate that the hardware depicted in Figure 1 may vary for particular implementations. For example, other peripheral devices, such as an optical disk drive and the like, also may be used in addition or in place of the hardware depicted. The depicted example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. LAN/ WAN/Wireless adapter 112 can also communicate with packages as described herein, and perform other data processing system or server processes described herein. Data processing system 100 can communicate over network 130 with one or more server systems 140, which are also not part of data processing system 100, but can be implemented, for example, as separate data processing systems 100. A server system 140 can be, for example, a central server system at a central mail processing facility.

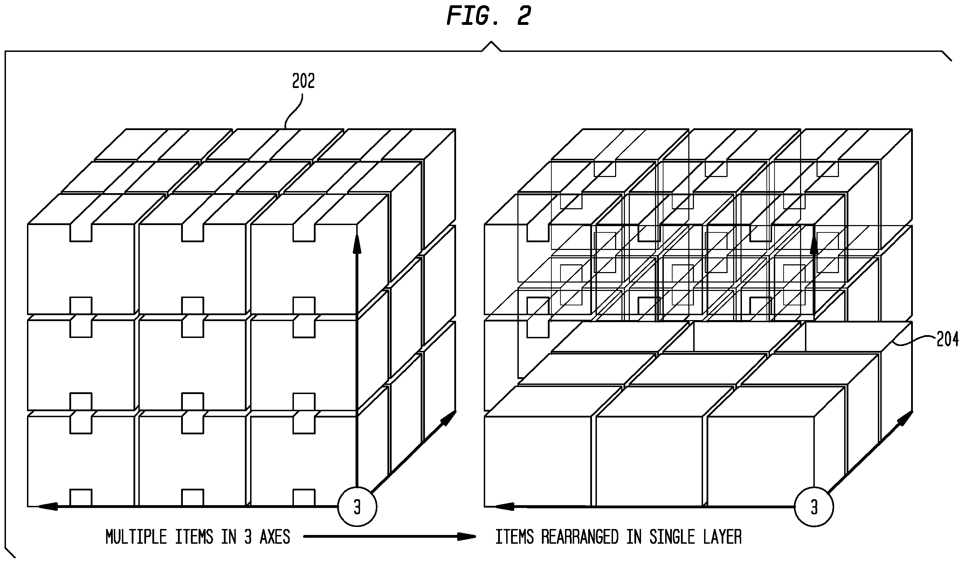

Figure 2 generally illustrates delayering of bulk items in three dimensions, as shown at 202, into a single layer, as shown at 204. Different mechanical systems are typically dedicated to resolving multiple items in each axis. Disclosed embodiments perform "delayering," which represents resolution to single items in the vertical axis, *i.e.,* a single layer. Exceptions in de-layering, where items may still be stacked despite delayering, typically cause exceptions downstream, and the cost of those exceptions often justifies human operators downstream to identify and resolve instances in which more than one item is being processed as one. Note that while the illustrative example of Fig. 2 shows an orderly stack of parcels at 202, and an orderly layer of parcels at 204, a typical delayering process is much less orderly, where a disordered stack or pile of parcels is delayered into a single disorderly layer of parcels for singulation or other further processing.

Disclosed embodiments can use a chute structure as a delayering unit and a buffer to sustain uniform flow. This results in a reduction in number of layers of packages and enhances the performance of the parcel processing system.

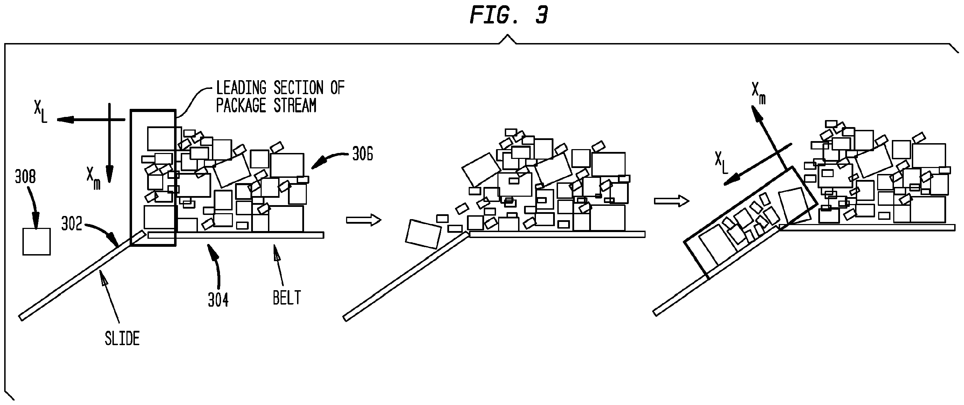

Figure 3 illustrates an example of transformation of a multi-layered package stream into reduced number of layers by shearing and transposing in accordance with disclosed embodiments. This example shows a stack of parcels 306 in a parcel stream as they are delayered in accordance with disclosed embodiments. A single stage includes a slide (or, interchangeably, chute) 302 in combination with a conveyor 304, which can be implemented as a conveyor belt or any equivalent conveyor system. At each slide 302, a "shearing" bar 308 or similar structure can be placed above and across the slide 302, at the bottom end or elsewhere, to "shear" off the top item(s) of stacked layers of parcels 306.

The slide 302 has a suitable coefficient of friction (such as greater than the coefficient of friction between parcels), slide angle (such as 30° or more relative to horizontal), and controlled input flow to reduce the build-up along Z direction by shearing and transposing the array of packages. That is, in some embodiments, the upper layers of the parcels fall forward ahead of the lower layers on the slide. The process, essentially, isolates the leading section of package stream and subjects it to transposing by gravity so that the axis along the lesser number of packages ($X_m$) realigns along the longitudinal ($X_L$) direction.

A delayering system as disclosed herein can control the input flow. The belt speed responds to the level sensors.

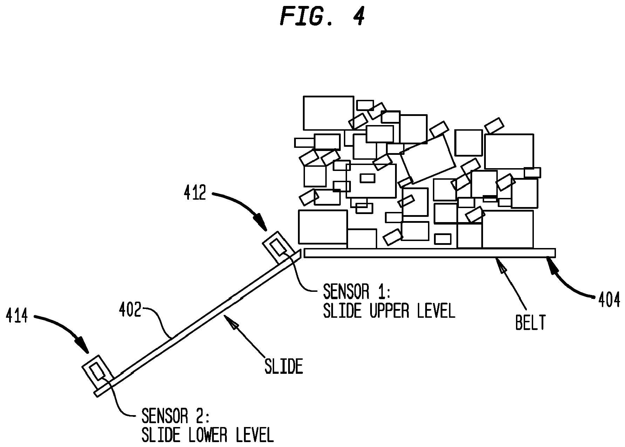

Figure 4 illustrates single stage of a system as disclosed herein, which includes a slide 402, a belt 404, and sensors 412 and 414 in accordance with disclosed embodiments.

- Neither Sensor 1 412 nor Sensor 2 414 are blocked; Slide 402 is empty; belt velocity of belt 404 is specified maximum speed (Vmax).
- Either Sensor 1 412 or Sensor 2 414 is blocked; Slide 402 is partly full; belt velocity of belt 404 is a specified intermediate speed.

$$(V_{\text{intermediate}} < V_{\text{max}}).$$

- Both Sensor 1 412 and Sensor 2 414 are blocked; the belt 404 is static.

A delayering system as disclosed herein can use a "cascade" of sequential delayering using multiple stages such as those illustrated in Figs. 2-4.

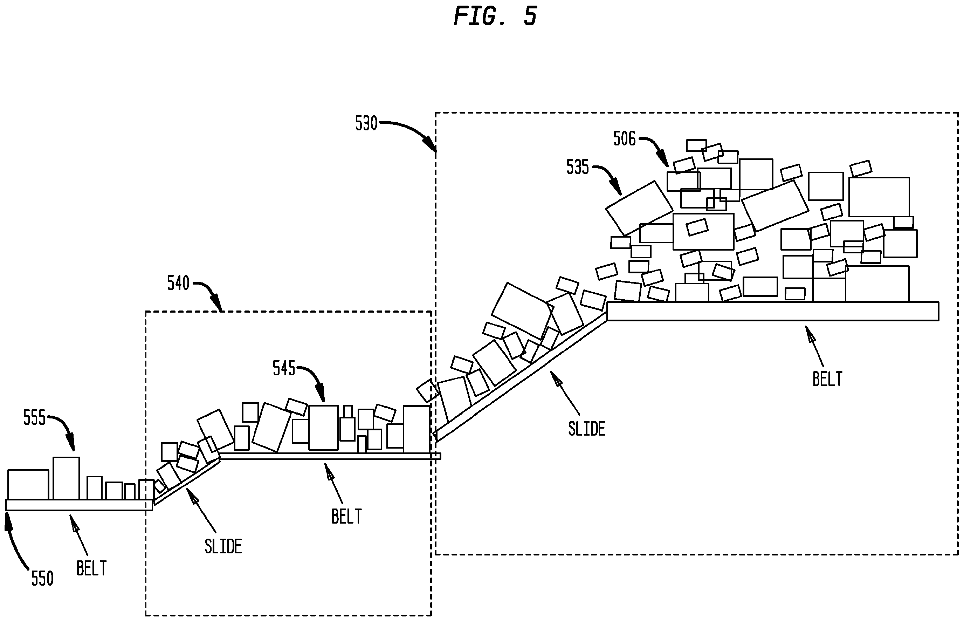

Figure 5 illustrates cascade delayering in accordance with disclosed embodiments. This example shows a first stage 530, a second stage 540, and an output conveyor 550. Each stage can be implemented as described herein, and though two stages are shown in this example, any number of stages can be used as effective to delayer the parcels 506. Note, in this example, that the parcels 506 are more completely delayered after each stage.

In an exemplary multi-stage implementation, a first delayering process in a first stage, using a single slide, reduces a 5-6 layer flow to a 1-3 layer flow. A second delayering process in a second stage, using a single slide, reduces the 1-3 layer flow a 1-2 layer flow, of substantially single-layered parcels, which can be treated as sufficiently delayered for most downstream processing.

A two-stage, two-cascade approach as disclosed herein is very effective in delayering a tall unstructured package stream. It is an efficient and inexpensive alternative to volume sensor and control approaches, and can be used with any type of parcel or package, including boxes, polybags, envelopes, and others, and mixes of these.

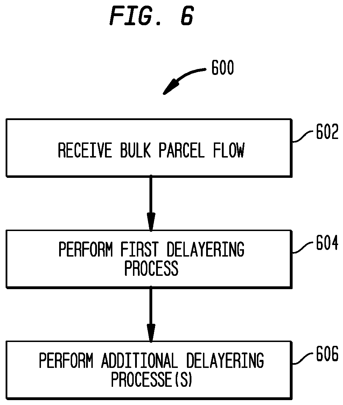

Figure 6 illustrates a process 600 in accordance with disclosed embodiments that can be performed, for example, by a system as disclosed herein, referred to generically as the "system" below.

The system receives a bulk parcel flow of a plurality of parcels (602).

The system performs a first delayering process on the bulk parcel flow 535 to produce a second parcel flow 545 (604). The first delayering process includes feeding the parcels on a belt to a slide. The slide can have a first sensor near a top end and a second sensor near a bottom end. The belt can operate at a maximum speed when both the first and second sensors indicate that there is no obstruction on the slide at those point, at an intermediate speed when either the first sensor or the second sensor indicates an obstruction at the respective points, and can be stopped when both the first sensor and the second sensor indicates an obstruction at those points.

The system performs at least one additional delayering process on the second (or subsequent) parcel flow to produce a delayered parcel flow 555 (606). The second delayering process includes feeding the parcels on a belt to a slide. The slide can have a first sensor near a top end and a second sensor near a bottom end. The belt can operate at a maximum speed when both the first and second sensors indicate that there is no obstruction on the slide at those point, at an intermediate speed when either the first sensor or the second sensor indicates an obstruction at the respective points, and can be stopped when both the first sensor and the second sensor indicates an obstruction at those points.

Those skilled in the art will recognize that, for simplicity and clarity, the full structure and operation of all systems suitable for use with the present disclosure is not being depicted or described herein. Instead, only so much of the physical systems as is unique to the present disclosure or necessary for an understanding of the present disclosure is depicted and described. The remainder of the construction and operation of the systems disclosed herein may conform to any of the various current implementations and practices known in the art. Further, the various steps described herein can be omitted or performed repeatedly, successively, concurrently, or in a different order in various embodiments.

It is important to note that while the disclosure includes a description in the context of a fully functional system, those skilled in the art will appreciate that at least portions of the mechanism of the present disclosure are capable of being distributed in the form of a instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs). In particular, computer readable mediums can include transitory and non-transitory mediums, unless otherwise limited in the claims appended hereto.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims.

## Claims

1. A method for delayering parcels, comprising:

   receiving a bulk parcel flow of a plurality of parcels, the bulk parcel flow having multiple layers of the plurality of parcels;
   performing a first delayering process on the bulk parcel flow to produce a second parcel flow; and
   performing at least one additional delayering process on the second parcel flow to produce a delayered parcel flow.

2. The method of claim 1, wherein at least one of the first delayering process or the additional delayering process includes feeding the parcels on a conveyor to a slide, wherein the slide has a first sensor near a top end and a second sensor near a bottom end, and wherein the conveyor can operate at a maximum speed when both the first and second sensors indicate that there is no obstruction on the slide at respective points, at an intermediate speed when either the first sensor or the second sensor indicates an obstruction at the respective points, and can be stopped when both the first sensor and the second sensor indicates an obstruction at those points.

3. The method according to any of the preceding claims, wherein at least one of the first delayering process or the additional delayering process includes feeding the parcels on a conveyor to a slide, wherein the slide has a coefficient of friction and slide angle such that parcels in upper layers of the plurality of layers are caused to fall to lower layers of the plurality of layers.

4. The method according to any of the preceding claims, wherein at least one of the first delayering process or the additional delayering process includes feeding the parcels on a conveyor to a slide, wherein a shearing bar causes parcels in upper layers of the plurality of layers to fall to lower layers of the of the plurality of layers.

5. The method according to any of the preceding claims, wherein both the first delayering process and the additional delayering process includes feeding the parcels on a conveyor to a slide.

6. A parcel delayering system, comprising
a first stage configured to receive a bulk parcel flow of a plurality of parcels, the bulk parcel flow having multiple layers of the plurality of parcels, and to perform a first delayering process on the bulk parcel flow to produce a second parcel flow; and
a second stage configured to perform an additional delayering process on the second parcel flow to produce a delayered parcel flow.

7. The parcel delayering system of claim 6, wherein at least one of the first stage or the second stage comprises a slide and a conveyor configured to feed the parcels to the slide,
wherein the slide has a first sensor near a top end and a second sensor near a bottom end, and
wherein the conveyor is configured to operate at a maximum speed when both the first and second sensors indicate that there is no obstruction on the slide at respective points, operate at an intermediate speed when either the first sensor or the second sensor indicates an obstruction at the respective points, and is stopped when both the first sensor and the second sensor indicates an obstruction at those points.

8. The parcel delayering system according to any of the preceding system based claims, wherein at least one of the first stage or the second stage comprises a slide and a conveyor configured to feed the parcels to the slide, and wherein the slide has a coefficient of friction and slide angle such that parcels in upper layers of the plurality of layers are caused to fall to lower layers of the plurality of layers.

9. The parcel delayering system according to any of the preceding system based claims, wherein at least one of the first stage or the second stage comprises:

a slide;
a conveyor configured to feed the parcels to the slide; and
a shearing bar extending across a width of the slide and placed to cause parcels in upper layers of the plurality of layers to fall to lower layers of the of the plurality of layers.

10. The parcel delayering system according to any of the preceding system based claims, wherein both the first stage and the second stage comprises a slide and a conveyor configured to feed the parcels to the slide.

# FIG. 1

100

| 102 | 104 | 108 | 110 | 111 |
|---|---|---|---|---|
| PROCESSOR | CACHE/ BRIDGE | MEMORY | GRAPHICS ADAPTER | DISPLAY |

106

EXPANSIONS BUS INTERFACE — 114

112 — LAN/WAN/ WiFi ADAPTER

116

| AUDIO ADAPTER | KEYBOARD/ MOUSE ADAPTER | DISK CONTROLLER | I/O ADAPTER |
|---|---|---|---|
| 124 | 118 | 120 | 122 |

130

NETWORK

STORAGE

PARCEL PROCESSING AND IMAGING

SERVER

126

128

140

## FIG. 2

MULTIPLE ITEMS IN 3 AXES     →     ITEMS REARRANGED IN SINGLE LAYER

EP 3 296 235 A1

EP 3 296 235 A1

FIG. 3

FIG. 4

412

414

402

SENSOR 1:
SLIDE UPPER LEVEL

SENSOR 2:
SLIDE LOWER LEVEL

SLIDE

BELT

404

FIG. 5

# *FIG. 6*

600

RECEIVE BULK PARCEL FLOW — 602

PERFORM FIRST DELAYERING
PROCESS — 604

PERFORM ADDITIONAL DELAYERING
PROCESSE(S) — 606

Europäisches
Patentamt

European
Patent Office

Office européen
des brevets

# EUROPEAN SEARCH REPORT

Application Number

EP 17 19 1400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/06475 A1 (CRISPLANT AS [DK]; HARTLEPP KARL HEINZ [CA]; BRUUN BRIAN [DK]; MATANIN) 10 February 2000 (2000-02-10) | 1-3,5-8, 10 | INV. B65G47/26 B65G47/68 B65G59/12 |
| Y | * pages 1-20; figures 1-6 * | 4,9 | |
| X | US 6 662 929 B1 (NEARY JAMES [US] ET AL) 16 December 2003 (2003-12-16) * columns 1-14; figures 1-10 * | 1,6 | |
| X | US 2002/079194 A1 (YDOATE EDWARD [US] ET AL) 27 June 2002 (2002-06-27) * pages 1-7; figures 1-5 * | 1,6 | |
| X | US 5 641 052 A (LAZZAROTTI S JAMES [US] ET AL) 24 June 1997 (1997-06-24) * columns 1-20; figures 1-17 * | 1,6 | |
| Y | US 2013/319830 A1 (OTA KEIKO [JP]) 5 December 2013 (2013-12-05) * pages 1-6; figures 1-12 * | 4,9 | |

TECHNICAL FIELDS
SEARCHED       (IPC)

B65G

The present search report has been drawn up for all claims

| Place of search | Date of completion of the search | Examiner |
|---|---|---|
| The Hague | 22 January 2018 | Martin, Benoit |

EPO FORM 1503 03.82 (P04C01)

## ANNEX TO THE EUROPEAN SEARCH REPORT
## ON EUROPEAN PATENT APPLICATION NO.

EP 17 19 1400

22-01-2018

| Patent document cited in search report | | Publication date | Patent family member(s) | | Publication date |
|---|---|---|---|---|---|
| WO 0006475 | A1 | 10-02-2000 | AU | 5027599 A | 21-02-2000 |
| | | | EP | 1100736 A1 | 23-05-2001 |
| | | | US | 6259967 B1 | 10-07-2001 |
| | | | WO | 0006475 A1 | 10-02-2000 |
| US 6662929 | B1 | 16-12-2003 | AU | 1782902 A | 27-05-2002 |
| | | | US | 6662929 B1 | 16-12-2003 |
| | | | US | 2002188377 A1 | 12-12-2002 |
| | | | US | 2003028283 A1 | 06-02-2003 |
| | | | WO | 0240385 A1 | 23-05-2002 |
| US 2002079194 | A1 | 27-06-2002 | AT | 298718 T | 15-07-2005 |
| | | | CN | 1482988 A | 17-03-2004 |
| | | | DE | 60111773 D1 | 04-08-2005 |
| | | | DE | 60111773 T2 | 11-05-2006 |
| | | | EP | 1345822 A2 | 24-09-2003 |
| | | | JP | 4125594 B2 | 30-07-2008 |
| | | | JP | 2004516210 A | 03-06-2004 |
| | | | US | 2002079194 A1 | 27-06-2002 |
| | | | WO | 02051724 A2 | 04-07-2002 |
| US 5641052 | A | 24-06-1997 | US | 5638938 A | 17-06-1997 |
| | | | US | 5641052 A | 24-06-1997 |
| | | | US | 5740901 A | 21-04-1998 |
| US 2013319830 | A1 | 05-12-2013 | CN | 103449107 A | 18-12-2013 |
| | | | EP | 2671823 A1 | 11-12-2013 |
| | | | JP | 5875116 B2 | 02-03-2016 |
| | | | JP | 2013249195 A | 12-12-2013 |
| | | | TW | 201350407 A | 16-12-2013 |
| | | | US | 2013319830 A1 | 05-12-2013 |

EPO FORM P0459